# EUROPÄISCHE PATENTSCHRIFT

(11) **EP 4 443 649 B1**
(45) Veröffentlichungstag und Bekanntmachung des Hinweises auf die Patenterteilung: **09.12.2026**
(21) Anmeldenummer: 24165527.3
(22) Anmeldetag: 22.03.2024
(51) Int. Cl.: H01Q 1/42, G01S 7/02, H01Q 1/02, H01Q 1/32

(54) **BELEUCHTETE RADOMABDECKUNG**
ILLUMINATED RADOME COVER
COUVERCLE DE RADÔME ÉCLAIRÉ

(30) Priorität: 06.04.2023 DE 102023203211
(43) Veröffentlichungstag der Anmeldung: 09.10.2024
(73) Patentinhaber: Magna Exteriors GmbH, 63877 Sailauf (DE)
(72) Erfinder: PAULE, Thomas, 63864 Glattbach (DE); BENITEZ, Miguel, 63533 Mainhausen (DE)
(74) Vertreter: Reuter, Silke Beatrix

(56) Entgegenhaltungen:
- EP-A1- 4 088 903
- JP-B1- 7 188 628

## Beschreibung

Die Erfindung betrifft eine beleuchtete Radomabdeckung für eine Öffnung eines Fahrzeugs und ein Verfahren zum Herstellen einer Radomabdeckung.

### Stand der Technik

In einer Karosserie bzw. Außenwandung eines Fahrzeugs sind regelmäßig funktionelle Elemente, wie bspw. Sensoren und dergleichen, anzuordnen. Zum Schutz dieser funktionellen Elemente sowie aus ästhetischen Gründen kann des Weiteren vorgesehen sein, derartige Öffnungen für die funktionellen Elemente mit geeigneten Abdeckelementen abzudecken oder zu verschließen.

In der Druckschrift DE 10 2004 050 501 B3 ist eine strahlungsdurchlässige Kunststoff-Abdeckung beschrieben. Diese ist für Öffnungen in Fahrzeug-Karosserien, insbesondere einem für elektromagnetische Strahlen wie Radarstrahlen durchlässigen Radom, das einen Körper aus durchsichtigem Kunststoff mit einer Außenfläche aufweist, vorgesehen. Durch die Außenfläche wird ein farblich kontrastierendes Muster einer Kühlerverkleidung oder eines Firmenemblems dargestellt. Dieses Firmenemblem ist auf einer der Außenfläche gegenüberliegenden Rückfläche des Körpers angebracht. Die Rückseite des durch Spritzen geformten transparenten Körpers ist flächig, insbesondere ganzflächig, jedoch unter Aussparung der für das Muster vorgesehenen Fläche mit einer Kunststoffmasse hinterspritzt. Außerdem ist ein Bereich des Musters nach dessen Anbringen eines Kunststoffkörpers durch Anspritzen eines Kunststoffmaterials mit dem von der Kunststoffmasse gebildeten Körper fest verbunden.

DE 10 2015 220 346 A zeigt betrifft ein Radom mit einer im Wesentlichen flächigen Frontplatte, welche frontseitig durchscheinend ausgebildet ist und welche rückseitig mit einer lichtundurchlässigen Schicht versehen ist, wobei in der lichtundurchlässigen Schicht zumindest eine Aussparung als Lichtdurchtritt ausgebildet ist, mit einem reflektierenden Bereich der flächigen Frontplatte, wobei der reflektierende Bereich der Aussparung benachbart angeordnet ist, mit zumindest einem im Wesentlichen flächigen Lichtleiter, welcher rückseitig an der lichtundurchlässigen Schicht angeordnet ist und mit zumindest einem Leuchtelement, welches mit dem Lichtleiter derart gekoppelt ist, so dass Licht in den Lichtleiter eintritt und so dass das Licht sich durch den zumindest einen Lichtleiter ausbreitet, wobei an dem zumindest einen Lichtleiter zumindest ein Diffusorelement angeordnet ist, welches derart angeordnet ist, dass das sich durch den zumindest einen Lichtleiter ausbreitende Licht in das Diffusorelement eintritt, sich durch das Diffusorelement ausbreitet und aus dem Diffusorelement austritt und an dem zumindest einen Lichtdurchtritt in die durchscheinende Frontplatte eintritt und gegebenenfalls an dem reflektierenden Bereich reflektiert wird, so dass es frontseitig aus der Frontplatte austritt, wobei das Diffusorelement eine modulierte Ausdehnung aufweist.

Aus der DE 10 2015 004 204 A1 ist ein Radom bekannt, wobei die Rückseite durch die Konturen eingeformter Oberflächenstrukturen in mehrere separaten Bereiche unterteilt ist. Eine derart unterteilte Rückseite weist in jedem der Bereiche eine Vertiefung auf. Jede der Konturen ist durch eine Einkoppelstruktur von der jeweils entlang der Kontur verlaufenden Vertiefung getrennt. In die Vertiefung wir ein flächiger Lichtleiter eingelegt.

DE 10 2016 007 119 A1 umfasst ein Radom mit einer Frontseite, einer Rückseite und zumindest einer in der Rückseite ausgebildete Einkoppelstruktur zum Einkoppeln von Licht. An der Rückseite ist mindestens ein Lichtleiter zur Übertragung des eingekoppelten Lichts angeordnet, wobei zumindest ein Lichtaustrittsbereich des zumindest einen Lichtleiters transluzent ausgebildet ist und wobei der Lichtaustrittsbereich zumindest in Richtung des Lichtaustritts vollständig von einer optisch nicht aktiven Komponente bedeckt ist.

EP 2 072 334 A1 zeigt eine Baugruppe zur beleuchteten Darstellung eines Logos in einem Kraftfahrzeug mit einem Träger und wenigstens einer Lichtquelle, die hinter oder neben dem Träger angeordnet ist. Über dem Logo ist eine transparente Kunststoff-Umspritzung angeordnet. Das Licht der Lichtquelle wird seitlich am Logo vorbei und/oder zwischen Logostrukturen hindurch in die transparente Kunststoff-Umspritzung eingekoppelt. Die transparente Kunststoff-Umspritzung weist lichtumlenkende Fasen auf.

WO 2021 /180 168 A1 zeigt eine Fahrzeugleuchte mit einer äußeren Linse, umfassend: einen ersten Linsenabschnitt und einen reflektierenden Abschnitt, wobei der reflektierende Abschnitt auf mindestens einer Seite des ersten Linsenabschnitts in engem Kontakt mit dem ersten Linsenabschnitt angeordnet ist und in der Lage ist, einen in den ersten Linsenabschnitt eintretenden Lichtstrahl so zu reflektieren, dass sich der Lichtstrahl im ersten Linsenabschnitt im Inneren ausbreitet.

EP 4 088 903 A1 offenbart ein Abdeckelement mit einem Gehäuse einer zwischen einer Frontplatte und einer Trägerplatte eingeformten und eingespritzten Folie, die zur Darstellung von dreidimensionalen Strukturen dient und einer Trägerplatte, die rückseitig mit einer Heizplatte verbunden ist.

Aus der JP 7 188628 B1 ist eine Radomabdeckung für ein Fahrzeug bekannt, die aus einem Hauptkörper, einer dekorativen Schicht und einer reflektierenden Schicht besteht.

Es ist Aufgabe der Erfindung, eine beleuchtete Radomabdeckung für eine Öffnung eines Fahrzeugs bereitzustellen, das einfach hergestellt werden kann und auf einfache Weise skalierbar ist.

### Zusammenfassung der Erfindung

Die Aufgabe wird gelöst mit einer Radomabdeckung für ein Fahrzeug, die eine Dekorationsfolie aufweist, die auf einer inneren Fläche mit einer Schicht aus einem ersten Kunststoff zur Herstellung einer Lichtleitschicht überspritzt ist und auf einer äußeren Fläche mit einer Abdeckschicht hinterspritzt ist, wobei auf der inneren Fläche auf der Dekorationsfolie ein Reflektionsring mit mindestens einer metallisch reflektierenden Oberfläche eingebracht ist, wobei der Reflektionsring einen Ringfuß mit einer schiefen Ebene aufweist, wobei die Lichtleitschicht Lichtleitelemente direkt an den Reflektionsring angeschlossen aufweist, die sich bis mindestens der Höhe des Reflektionsrings erheben, wobei in die Lichtleitelemente eingespeistes Licht sich durch Totalreflektion entlang der Höhe der Lichtleitelemente ausbreitet und von der schiefen Ebene des Reflektionsrings in die Lichtleitschicht eingekoppelt wird.

Die Lichtleitschicht ist mit einer Reflektionsfolie abgedeckt, die das Licht in die Lichtleitschicht hinein reflektiert.

Die Lichtleitelemente bestehen entweder aus einem Lichtleitring mit einem Aussendurchmesser, der dem Innendurchmesser des Reflektionsrings entspricht, oder aus Lichtleitdomen.

Die Lichtleitelemente führen Licht aus LEDs, die auf einer Leiterplatte montiert sind, die zwischen der Radomabdeckung und dem Radarsensor verbaut ist.

Die Dekorationsfolie umfasst ein Heizelement oder dient für ein Heizelement als Träger.

Die Aufgabe wird auch gelöst mit einem Verfahren zur Herstellung einer Radomabdeckung wie beschrieben mit den Schritten:
Einlegen der Dekorationsfolie in die Kavität eines Werkzeugteils,
Einlegen des Reflektionsrings in die Kavität des Werkzeugteils oder in die Kavität eines Wendewerkzeugs
Einlegen der Reflektionsfolie in die Kavität des Wendewerkzeugs
Spritzen der Lichtleitschicht mit den Lichtleitelementen,
Drehen des Wendewerkzeugs um seine Längsachse um 180°, öffnen, Spitzen der Abdeckschicht auf der Außenseite der Dekorationsfolie.

### Kurzbeschreibung der Erfindung

Die Erfindung ist anhand von Ausführungsbeispielen in der Zeichnung schematisch dargestellt und wird im Folgenden unter Bezugnahme auf die Zeichnung ausführlich beschrieben.

Die Figuren werden zusammenhängend und übergreifend beschrieben, gleiche Bezugszeichen bezeichnen gleiche Bauteile.
Fig. 1 und 2 zeigen in schematischer Darstellung ein Verfahren zur Herstellung einer Radomabdeckung in einem Wendewerkzeug,
Fig. 3 zeigt in schematischer Darstellung einer Ausführungsform der erfindungsgemäßen Radaomabdeckung,
Fig. 4 zeigt eine Aufsicht auf eine Radomabdeckung,
Fig. 5 zeigt eine alternative Ausführungsform.

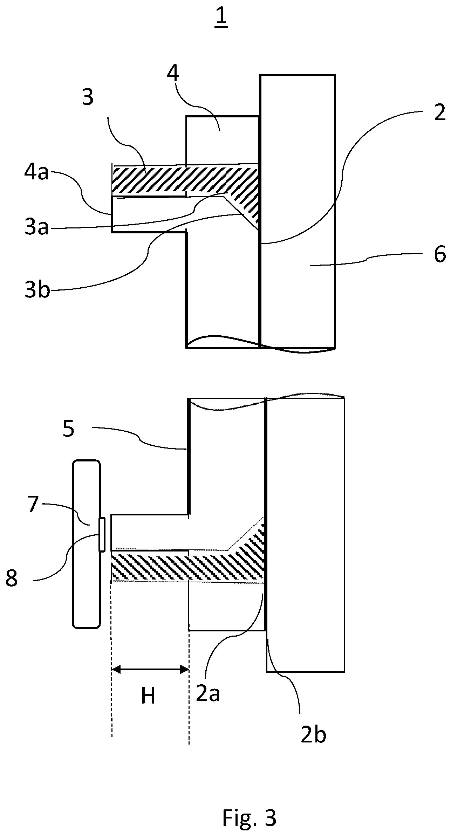

Fig. 3 zeigt eine Dekorationsfolie 2, die metallisiert sein kann und/oder aus zwei Kunststoffschichten gebildet ist, zwischen denen zumindest teilweise eine metallische Schicht eingebettet ist.

**In** einer Ausführungsform ist eine der Kunststoffschichten Träger von Heizleitungen. Diese sind entweder auf der Folie aufgedampft oder aufgedruckt. Die Heizleitungen sind dabei mäanderförmig aufgebracht, wobei die Abstände der einzelnen Leitungen so gewählt sind, dass das Radarsignal nicht gestört wird.

Alternativ wird eine der Kunststoffschichten als Träger für ein Heizelement verwendet, das auf einer getrennten Folie aufgebracht ist. Diese Heizfolie wird mit der Dekorationsfolie 2 verbunden, im einfachsten Fall verklebt. Alternativ zur Verwendung von Heizleitungen ist eine Verwendung von Heizflächen als Flächenheizung denkbar.

Die innen liegende Fläche 2a dieser Dekorationsfolie 2 wird bei der Herstellung stellenweise mit Farbe bedruckt, so dass auf der innen liegenden Fläche insgesamt ein Muster bereitgestellt ist.

Aufgrund dieser Bedruckung mit beispielsweise schwarzer Farbe ist die sichtbare innen liegenden Fläche 2a demnach zumindest teilweise farblich gestaltet.

Das Bedrucken ist dabei in einer Ausführungsform rein gestalterisch zu sehen. Allerdings kann auch ein Heizelement zusätzlich oder als einzige Bedruckung aufgedruckt werden.

Die Dekorationsfolie 2 mit der aufgetragenen Farbe und/oder dem Heizelement kann einem Tiefziehprozess unterzogen werden. Durch diesen Tiefziehprozess wird die Dekorationsfolie 2 derart verformt, dass sie im Querschnitt nunmehr ein Profil oder Relief aufweist.

Für Radomabdeckungen 1 mit Dekorationsfolien 2, die im Tiefziehprozess stark umgeformt werden, ist gegebenenfalls das Bedrucken mit dem Heizelement dem Tiefziehprozess nachzuordnen. Dann erfolgt erst das Tiefziehen der Dekorationsfolie 2 und erst nach der dreidimensionalen Ausgestaltung das Bedrucken.

Auf die innere Fläche 2a der Dekorationsfolie 2 wird ein Reflektionsring 3 angebracht, der mit seinem Ringfuss 3a bündig mit der Dekorationsfolie abschließt. Der Reflektionsring 3 weist mindestens eine metallisierte Oberfläche auf und besteht entweder aus einem Kunststoffring, der verchromt ist, oder aus einem reflektierenden Metall.

Der Ringfuss 3a schließt zum Ringinneren mit einer schiefen Ebene 3b ab, wobei diese schiefe Ebene 3b einen Winkel von 45° zur Senkrechten aufweist.

Der Reflektionsring 3 besitzt in einem Ausführungsbeispiel 8mm bis 10 mm Höhe auf. Direkt am Reflektionsring 3 wird ein glasklarer Kunststoff angespritzt, der an der Innenwand des Reflektionsrings 3 angeschmiegt einen Lichtleiterring 4b ausbildet. Zudem wird die innere Fläche 2a ebenfalls mit glasklarem Polymer zur Erzeugung einer Lichtleitschicht 4 versehen.

Eine Reflektionsfolie 5 deckt die Lichtleitschicht 4 im Innern des Rings ab. Diese Reflektionsfolie 5 reflektiert sichtbares Licht ist aber für Radarwellenlängen transparent.

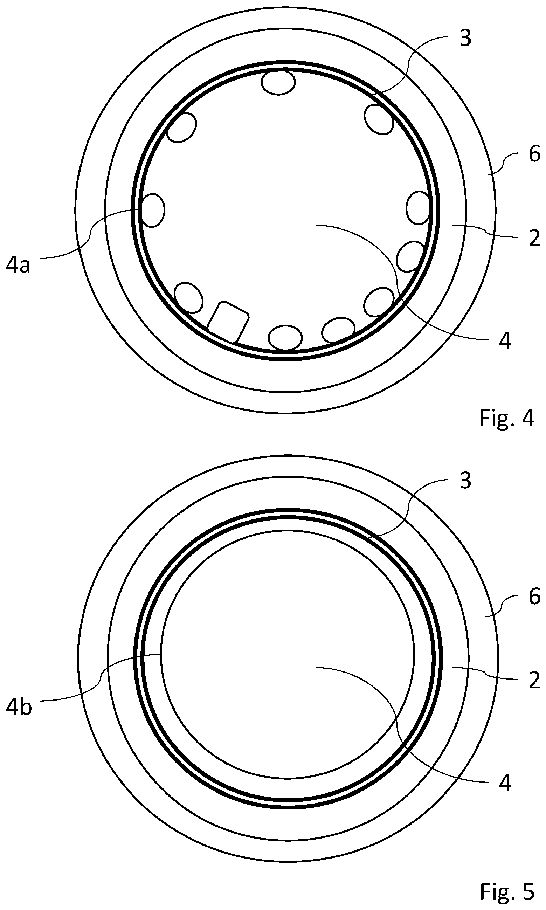

Figur 5 zeigt in Aufsicht auf die Radomabdeckung 1 den Lichtleitring 4b. Alternativ dazu können, wie ein Figur 4 gezeigt wird, auch Lichtleitdome 4a gespritzt werden, die rund, oval oder eckig im Querschnitt sein können. Lichtleitdome 4a und Lichtleitring 4b als Lichtleitelemente enden bündig in der Höhe H mit dem Reflektionsring 3.

Die Höhe H, die der Reflektionsring 3 und das Lichtleitelement über der Lichtleitschicht 4 übersteht, beträgt beispielsweise 2-3 mm.

Dadurch ist es einfacher, eine Leiterplatte 7 mit LEDs 8, wie mit dem Bauteil 7 angedeutet, zu installieren.

Auf der Leiterplatte 7 sind im Kreis angebrachte LEDs verbaut, die entweder jede in einen Lichtleitdom 4a oder alle in den Lichtleitring 4b Licht einspeisen.

Durch Totalreflektion breitet sich das Licht entlang der Höhe der Lichtleitelemente aus und wird von der schiefen Ebene 3b des Reflektionsrings 3 in die Lichtleitschicht 4 eingekoppelt.

Die Lichtleitschicht 4 ist mit einer Reflektionsfolie bedeckt, so dass hier einen Totalreflektion des sich in der Lichtleitschicht 4 ausbreitenden Licht erfolgt. Das Licht wird auch teilweise an der Dekorationsfolie reflektiert und teilweise ausgekoppelt. Auf der äußeren Fläche 2b der Dekorationsfolie 2 wird eine transparente Schicht als Abdeckschicht 6 aufgebracht.

Die Radomabdeckung 1 kann als Emblem für das Fahrzeug ausgebildet sein, wie sie beispielsweise prominent im Zentrum eines Kühlergrills ausgebildet ist. Als Kunststoff zu einem Bespritzen bzw. zum Über- und/oder Hinterspritzen der Folie kann Polycarbonat (PC) vorgesehen sein. Dadurch, dass insbesondere Polycarbonat als zu verwendender Kunststoff für die beiden Schichten, also der Schicht auf der Oberseite sowie der Abdeckschicht, und bspw. Polycarbonat für die Folie vorgesehen ist, wird ein guter Verbund zwischen den einzelnen Schichten und der Folie bereitgestellt. Dabei ist insbesondere der zum Überspritzen der Vorderseite der Folie vorgesehene erste Kunststoff zumindest teilweise optisch transparent, so dass ein Muster, das durch die metallisierte Folie dargestellt ist, nach außen hin sichtbar ist.

Dadurch, dass der auf die Dekorationsfolie 2 über- und unterzuspritzende Kunststoff sowie die Kunststoffschichten der Dekorationsfolie 2 aus Polycarbonat gebildet sind oder zumindest materiell darauf basieren, wird insgesamt eine weitgehend homogene und einstückige Radomabdeckung bereitgestellt.

Die metallische Schicht der Folie weist eine Dicke von wenigen Mikrometern, etwa in einer Größenordnung von 2 Micrometern, auf. Die Dicke der metallischen Schicht ist so gewählt, dass sie für elektromagnetische Wellen transparent ist und gleichzeitig eine metallische Optik erzeugt.

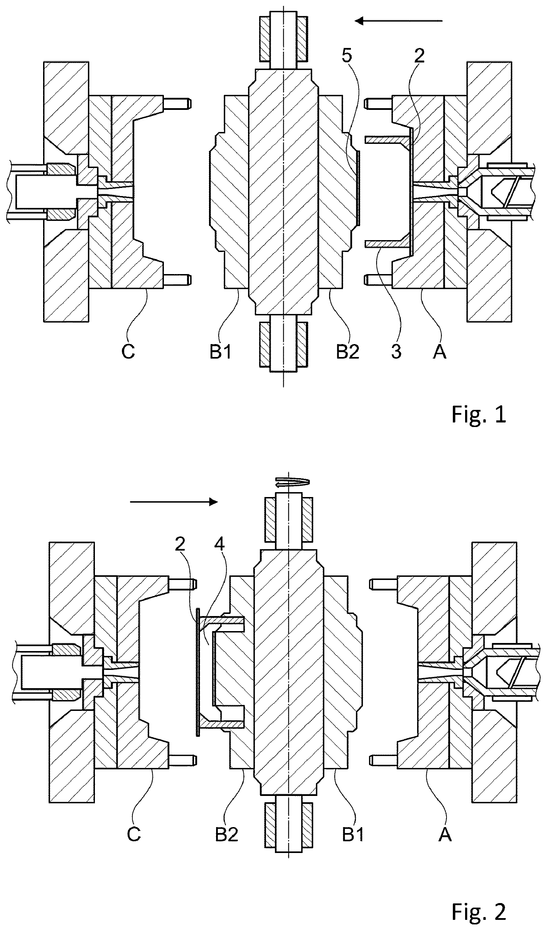

Die Figuren 1 und 2 stellen schematisch ein vereinfachtes Herstellverfahren dar. Dazu wird ein Wendewerkzeug für den Kunststoff-Spritzguss verwendet. Das Werkzeug besteht dabei zumindest aus einem Werkzeugteil A mit einer Kavität, einem Wendewerkzeug mit den Kavitäten B1 und B2 und einem Werkzeugteil C mit einer Kavität.

Im ersten Schritt wird der erste Spritzgussvorgangs vorbereitet, indem die Dekorationsfolie in die Kavität des Werkzeugs A eingelegt wird. In diesem Beispiel ist die Dekorationsfolie 2 eben. Nachdem die Dekorationsfolie 2 eingelegt wurde, wird der Reflektionsring 3 in die Kavität des Werkzeugteils A oder aber auch in die Kavität B2 eingesetzt.

In die Kavität B2 des Wendewerkzeugs wird ebenfalls eine Folie, die Reflektionsfolie 5 eingelegt. Nach dem Schließen des Werkzeugs durch Bewegung des Werkzeugteils A in Richtung des Pfeils wird die Lichtleitschicht 4 mit den Lichtleitelementen gespritzt.

Das Wendewerkzeug wird um seine Längsachse um 180° verdreht.

Anschließend wird das Werkzeug wieder geöffnet, wobei dafür gesorgt wird, dass das frisch gespritzte Bauteil im der Kavität B2 verbleibt.

Das Werkzeug C bewegt sich in Pfeilrichtung auf das Wendewerkzeug zu und wird geschlossen. Dann wird die Abdeckschicht 6 auf die Außenseite 2b der Dekorationsfolie 2 gespritzt.

### Bezugszeichen

1 Radomabdeckung
2 Dekorationsfolie
3 Reflektionsring
3a Ringfuss
3b innere schiefe Ebene
4 Lichtleitschicht
4a Lichtleiterdome
4b Lichtleiterring
5 Reflektionsfolie
6 Abdeckschicht
7 Leiterplatte
8 LEDs

## Patentansprüche

1. Radomabdeckung (1) für ein Fahrzeug, die eine Dekorationsfolie (2) aufweist, die auf einer inneren Fläche (2a) mit einer Schicht aus einem ersten Kunststoff zur Herstellung einer Lichtleitschicht (4) überspritzt ist und auf einer äußeren Fläche (2b) mit einer Abdeckschicht (6) hinterspritzt ist, wobei auf der inneren Fläche (2a) auf der Dekorationsfolie (2) ein Reflektionsring (3) mit mindestens einer metallisch reflektierenden Oberfläche eingebracht ist, wobei der Reflektionsring (3) einen Ringfuss (3a) mit einer schiefen Ebene (3b) aufweist, wobei die Lichtleitschicht (4) Lichtleitelemente direkt an den Reflektionsring (3) angeschlossen aufweist, die sich bis mindestens der Höhe (H) des Reflektionsrings (3) erheben, wobei in die Lichtleitelemente eingespeistes Licht sich durch Totalreflektion entlang der Höhe der Lichtleitelemente ausbreitet und von der schiefen Ebene (3b) des Reflektionsrings (3) in die Lichtleitschicht (4) eingekoppelt wird.

2. Radomabdeckung (1) nach Anspruch 1, wobei die Lichtleitschicht (4) mit einer Reflektionsfolie (5) abgedeckt ist, die das sichtbare Licht in die Lichtleitschicht (4) hinein reflektiert.

3. Radomabdeckung (1) nach Anspruch 1, wobei die Lichtleitelemente entweder ein Lichtleitring (4b) mit einem Aussendurchmesser, der dem Innendurchmesser des Reflektionsrings (3) entspricht, sind oder aus Lichtleitdomen (4a) bestehen.

4. Radomabdeckung (1) nach Anspruch 1 oder 3, wobei
die Lichtleitelemente dazu ausgelegt sind Licht aus LEDs (8) zu führen, die auf einer Leiterplatte (7) montiert sind, die zwischen der Radomabdeckung (1) und einem Radarsensor verbaut ist.

5. Radomabdeckung (1) nach Anspruch 1, wobei die Dekorationsfolie (2) ein Heizelement umfasst oder für ein Heizelement als Träger dient.

6. Verfahren zur Herstellung einer Radomabdeckung (1) nach den Ansprüchen 1 bis 4 mit den Schritten:
Einlegen der Dekorationsfolie (2) in die Kavität eines Werkzeugteils (A),
Einlegen des Reflektionsrings (3) in die Kavität des Werkzeugteils (A) oder
in die Kavität (B2) eines Wendewerkzeugs,
Einlegen der Reflektionsfolie (5) in die Kavität (B2) des Wendewerkzeugs,
Spritzen der Lichtleitschicht (4) mit den Lichtleitelementen,
Drehen des Wendewerkzeugs um seine Längsachse um 180°, öffnen,
Spritzen der Abdeckschicht (6) auf der äußeren Fläche (2b) der Dekorationsfolie (2).

## Claims

1. Radome cover (1) for a vehicle, which has a decorative film (2), which is over-injected on an inner surface (2a) using a layer made of a first plastic to produce a light guiding layer (4) and is back-injected on an outer surface (2b) using a cover layer (6), wherein a reflection ring (3) having at least one metallically reflective surface is introduced on the inner surface (2a) on the decorative film (2), wherein the reflection ring (3) has a ring base (3a) having an inclined plane (3b), wherein the light guiding layer (4) has light guiding elements directly connected to the reflection ring (3), which rise at least up to the height (H) of the reflection ring (3), wherein light injected into the light guiding elements is transmitted by total internal reflection along the height of the light guiding elements and is coupled by the inclined plane (3b) of the reflection ring (3) into the light guiding layer (4).

2. Radome cover (1) according to Claim 1, wherein the light guiding layer (4) is covered using a reflective film (5), which reflects the visible light into the light guiding layer (4).

3. Radome cover (1) according to Claim 1, wherein the light guiding elements either are a light guiding ring (4b) having an external diameter which corresponds to the internal diameter of the reflection ring (3) or consist of light guiding domes (4a).

4. Radome cover (1) according to Claim 1 or 3, wherein the light guiding elements are designed to guide light from the LEDs (8),, which are mounted on a circuit board (7) that is installed between the radome cover (1) and a radar sensor.

5. Radome cover (1) according to Claim 1, wherein the decorative film (2) comprises a heating element or is used as a carrier for a heating element.

6. Method for producing a radome cover (1) according to Claims 1 to 4 comprising the following steps:
laying the decorative film (2) in the cavity of a mould part (A),
laying the reflection ring (3) in the cavity of the mould part (A) or in the cavity (B2) of a revolving mould,
laying the reflective film (5) in the cavity (B2) of the revolving mould,
injection moulding the light guiding layer (4) having the light guiding elements,
rotating the revolving mould around its longitudinal axis by 180°, opening it, injection moulding the cover layer (6) on the outer surface (2b) of the decorative film (2).

## Revendications

1. Couvercle de radôme (1) pour un véhicule, qui comporte un film décoratif (2) qui est surmoulé sur une surface intérieure (2a) d'une couche composée d'une première matière plastique pour fabriquer une couche de guidage de lumière (4) et est pulvérisé par l'arrière sur une surface extérieure (2b) d'une couche de recouvrement (6), une bague réfléchissante (3) avec au moins une surface réfléchissante métallique étant installée sur la surface intérieure (2a) sur le film décoratif (2), la bague réfléchissante (3) comportant une base annulaire (3a) avec un plan incliné (3b), la couche de guidage de lumière (4) comportant de manière directement raccordée à la bague réfléchissante (3) des éléments de guidage de lumière, qui s'élèvent jusqu'à au moins la hauteur (H) de la bague réfléchissante (3), de la lumière injectée dans les éléments de guidage de lumière se propageant par réflexion totale le long de la hauteur des éléments de guidage de lumière et étant injectée depuis le plan incliné (3b) de la bague réfléchissante (3) dans la couche de guidage de lumière (4).

2. Couvercle de radôme (1) selon la revendication 1, la couche de guidage de lumière (4) étant recouverte d'un film réfléchissant (5) qui réfléchit la lumière visible dans la couche de guidage de lumière (4).

3. Couvercle de radôme (1) selon la revendication 1, les éléments de guidage de lumière étant soit une bague de guidage de lumière (4b) avec un diamètre extérieur qui correspond au diamètre intérieur de la bague réfléchissante (3) soit étant constitués de dômes de guidage de lumière (4a).

4. Couvercle de radôme (1) selon la revendication 1 ou 3, les éléments de guidage de lumière étant conçus pour guider de la lumière provenant de diodes électroluminescentes (8), qui sont montées sur une carte de circuits imprimés (7) qui est installée entre le couvercle de radôme (1) et un capteur radar.

5. Couvercle de radôme (1) selon la revendication 1, le film décoratif (2) comprenant un élément chauffant ou faisant office de support pour un élément chauffant.

6. Procédé de fabrication d'un couvercle de radôme (1) selon les revendications 1 à 4 avec les étapes :
insertion du film décoratif (2) dans la cavité d'une partie d'outil (A),
insertion de la bague réfléchissante (3) dans la cavité de la partie d'outil (A) ou dans la cavité (B2) d'un outil de tournage,
insertion du film réfléchissant (5) dans la cavité (B2) de l'outil de tournage,
pulvérisation de la couche de guidage de lumière (4) avec les éléments de guide de lumière, rotation de l'outil de tournage autour de son axe longitudinal de 180°, ouverture, pulvérisation de la couche de recouvrement (6) sur la surface extérieure (2b) du film décoratif (2).
